# EUROPEAN PATENT SPECIFICATION

(11) **EP 3 627 021 B1**
(45) Date of publication and mention of the grant of the patent: **02.06.2021**
(21) Application number: 18195624.4
(22) Date of filing: 20.09.2018
(51) Int. Cl.: F16K 31/60, F16K 41/04, F16K 1/52, F16K 5/10, F16K 5/12, F24D 19/10, F16K 27/02, F16K 31/00, G05D 23/02, F16K 37/00

(54) **VALVE WITH ROTATABLE PRESETTING ELEMENT**
VENTIL MIT DREHBAREM VOREINSTELLUNGSELEMENT
SOUPAPE COMPORTANT UN ÉLÉMENT DE PRÉRÉGLAGE ROTATIF

(43) Date of publication of application: 25.03.2020
(73) Proprietor: Danfoss A/S, 6430 Nordborg (DK)
(72) Inventor: HØLCK, Poul, 6430 Nordborg (DK); MARKVART, Arne, 6430 Nordborg (DK)
(74) Representative: Patentanwälte Olbricht Buchhold Keulertz

(56) References cited:
- EP-A1- 3 193 049
- EP-A1- 3 193 050
- BE-A- 838 649
- DE-A1-102013 010 433

## Description

The invention relates to a valve, e.g. for use as a thermostat valve in a heating or cooling system.

DE-G 1 745 874 describes a stop valve with adjustable presetting, in particular for heating systems. A turning handle is connected to an axle bolt carrying a valve body acting as a cut-off element for a ring seat. A tube shutter has an inclined lower edge such that rotation may release partial free cross-sections of an inlet port. The shutter is locked by a screw. After loosening of the screw, the presetting of the shutter may be adjusted by use of a wrench.

EP 3 193 049 A1 discloses a valve comprising a valve housing, an insert, a valve seat, a valve element, a first fluid port and a second fluid port, wherein the valve comprises a handle, that in a first axial position can be rotated with the insert to reverse the flow through the valve, and in a second axial position blocks a rotation of the insert.

DE 10 2013 010 433 A1 discloses a thermostat valve comprising a valve housing having an inlet, an outlet, a valve seat arranged between the inlet and the outlet, a valve element connected to a spindle, the valve element being movable towards and away from the valve seat, and a connection geometry for connecting a bellows element to the valve housing, the bellows element actuating the spindle. The valve seat is part of an insert arranged between the inlet and the outlet, the insert and the spindle being inserted into the valve housing from the same side.

It may be considered an object to provide a valve which may be adjusted in a simple and exact manner.

This is addressed by a valve according to claim 1. Dependent claims refer to preferred embodiments.

A valve according to the invention comprises a central portion including elements disposed to regulate a fluid flow through a valve opening. A valve element is movable relative to a valve seat to adjust the valve opening. The valve preferably comprises first and second fluid ports, by which it may be connected e.g. to a cooling or heating system. By adjusting the valve opening by positioning the valve element relative to the valve seat, the fluid flow between the fluid ports may be regulated.

The valve further comprises a presetting element to adjust a maximum flow through the valve opening. The presetting element is rotatable around the central portion. The central portion is configured to remain stationary as the presetting element is being rotated.

The presetting element is rotatable to adjust the maximum flow preferably by changing an effective free cross-section of a flow channel for the fluid flow through the valve. With respect to the fluid flow, the flow channel is preferably arranged in series to the valve seat. A larger effective free cross-section of the flow channel will thus allow a higher maximum flow through the valve, whereas a smaller effective free cross-secton will stronger limit the maximum flow. Thus, the rotation position of the presetting element determines the maximum flow through the valve without changing the positioning of the valve element and valve seat.

The valve construction according to the invention, providing a stationary central portion around which the presetting element may be rotated allows a simple structure. The rotation position of the presetting element may easily be determined in relation to the stationary central portion, such that presetting may be effected in a precise manner.

According to a preferred embodiment, the valve element is movable relative to the valve seat in axial direction, i.e. in a direction identical or parallel to the rotation axis of the presetting element. The valve element is preferably disposed to be linearly displaced against the valve seat without rotation, i.e. while remaining in a fixed rotation position.

The central portion of the valve comprises a valve pin which is slidingly arranged, i.e. can be linearly displaced along the axial direction, to act on the valve element. Preferably, the valve pin may abut against the valve element. A valve spring may act on the valve element in an opening direction of the valve, i.e. away from the valve seat. The valve pin may act on the valve element in the axial direction in a closing direction of the valve, i.e. to urge the valve pin towards the valve seat.

The presetting element may comprise a sleeve arranged to surround at least a part of the central port. The sleeve may be arranged co-axially to the central portion to rotate around its central longitudinal axis. Preferably, the sleeve may define a free cross-section of a flow channel arranged in series to the valve seat. The cross-section is dependent on the rotating position of the presetting element. For example, the presetting element may comprise a flow opening which according to the rotating position of the presetting element may be selectively aligned with the flow channel. The flow channel may preferably be directed radially. For example, a flow channel opening may be provided within the central portion. In a particularly preferred embodiment, a degree of overlap between a radial flow opening formed in the sleeve of the presetting element and a radial flow channel opening formed in the central portion may be selected by the rotation position of the presetting element.

According to the invention, an upper part of the central portion protrudes from the valve. The upper part of the central portion comprises a protruding valve pin, which is thus accessible for a regulating part mounted to the valve.

Also, the presetting element comprises or is connected to a rotatable handle. The rotatable handle is ring shaped and arranged to rotate around at least a part of the central portion.

A presetting indicator may be provided to indicate the position of the presetting element. Preferably, the presetting indicator may comprise two indicator elements movable with respect to each other, dependent on a movement of the presetting element. One of the two elements may be a presetting position marker and the other a presetting position scale. For example, the scale may comprise equidistant marks. One of the indicator elements may be provided on the handle and the other on the central portion, such that a relative movement of the handle and the central portion is indicated by the presetting indicator. Preferably, the presetting scale may be provided on the handle and the presetting position marker on the central portion.

Preferably, the presetting position marker and the presetting position scale may be arranged adjacent to each other in the same axial position, i.e. at the same height (in upright orientation of the valve). This has the advantage that the reading of the part of the presetting position scale to which the presetting position marker points can be accurately obtained even if not observed in parallel to the longitudinal axis. Reading of the position indicated by the presetting indicator is therefore facilitated.

In a preferred embodiment, the valve may comprise a valve insert being rotatable to reverse the flow direction through the valve opening, i.e. to switch the connection of the two sides of the valve insert to inlet and outlet ports. It is generally preferred to install the valve connected to inlet and outlet fluid ports such that the flow through the valve opening is directed in valve opening direction and not valve closing direction, i.e. such that the fluid flows first through the valve opening at the valve seat before contacting the valve element. If the flow through the valve opening is in reverse direction, i.e. parallel to the closing direction of the valve, it is possible for the fluid flow to move the valve element in the closing direction. In the case of a reversible valve insert, the valve may be installed regardless of flow direction between output and input ports, because by rotating the valve insert it is always possible to achieve a desired flow direction.

Preferably, the valve insert may be rotatable by rotating the central portion. While the central portion remains stationary with regard to a rotation of the presetting element as described above, a rotation of the central portion may be used to rotate the entire valve insert. In this way, reversing of the flow direction through the valve is significantly facilitated. Preferably, a top of the central portion protruding from the top of the valve may be used to rotate the valve insert. A coupling element made be provided on the top of the central portion to be coupled with a reversing tool to rotate the valve insert. It is also preferred to provide a direction indicator on the top of the central portion to indicate the current flow direction, e.g. in the shape of an arrow. This significantly facilitates correct installation.

In a particularly preferred embodiment, one and the same element, preferably in the shape of an arrow, may serve both as a direction indicator and as a presetting position marker of a presetting position indicator.

If the valve insert is rotated by rotating the central portion, the positioning of the presetting element relative to the central portion may remain unchanged, i.e. the presetting element may rotate along with the central portion. This has the advantage that presetting is maintained.

Preferably, the valve may comprise parts of metal and/or plastic material. In particular, it may be preferred to provide the central portion to be made at least partially, preferably entirely out of a plastic material.

Preferred embodiments of the invention will now be described with reference to the drawings, wherein
- Fig. 1: shows a perspective view of an embodiment of a valve;
- Fig. 2: shows a side view of the valve of figure 1;
- Fig. 3a: shows a sectional view along A..A in figure 1;
- Fig. 3b: shows the sectional view of Fig. 3a with a valve insert rotated;
- Fig. 4: shows an exploded sectional view of the valve of figures 1-3b.

The figures show a valve 10 including a valve insert 14 inserted in a valve housing 12 with a first fluid port 16 and second fluid port 18.

The depicted embodiment of a valve 10 is the lower half of a thermostat valve which controls the flow of heating fluid between a first and second fluid port 16, 18 dependent on the axial movement of a valve pin 24 along a longitudinal axis X. The valve 10 may be connected with its fluid ports 16, 18 between a source of heating fluid and a radiator or floor heating system (not shown). In use of the valve 10, a thermostat (not shown) may be mounted on top of the valve. The thermostat may determine a desired amount of heating fluid to pass thorough the valve 10. To regulate the fluid flow between the fluid ports 16, 18, the thermostat axially moves the valve pin 24. The thermostat thus sets the axial position of the valve pin 24 according to a desired heat flow, depending on the current room temperature in relation to a selected heating setting.

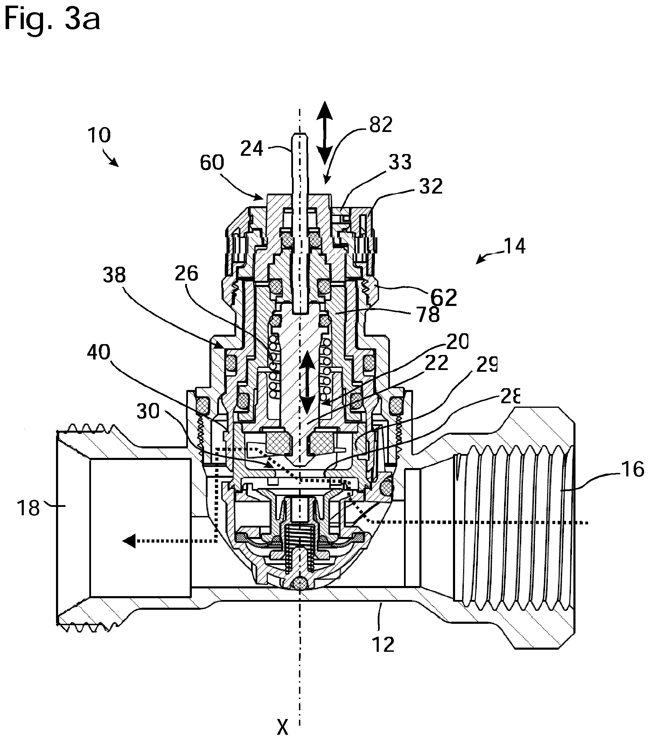

As visible from the sectional view of figure 3a, the valve pin 24 abuts against a valve element 20 (valve stem 22). The valve pin 24 may depress the valve stem 22 in closing direction of the valve 10 against the action of a valve spring 26. The valve stem 22 is thus movable in longitudinal direction relative to a valve seat 28 provided as an opening in a valve seat ring 29. The free cross-section of a valve opening 30 formed between the end of the valve stem 22 and the valve seat 28 is thus regulated by longitudinal movement of the valve stem 22. As shown as a dotted line in Fig. 3a, fluid from the first fluid port 16 passes through the valve opening 30 to the second fluid port 18.

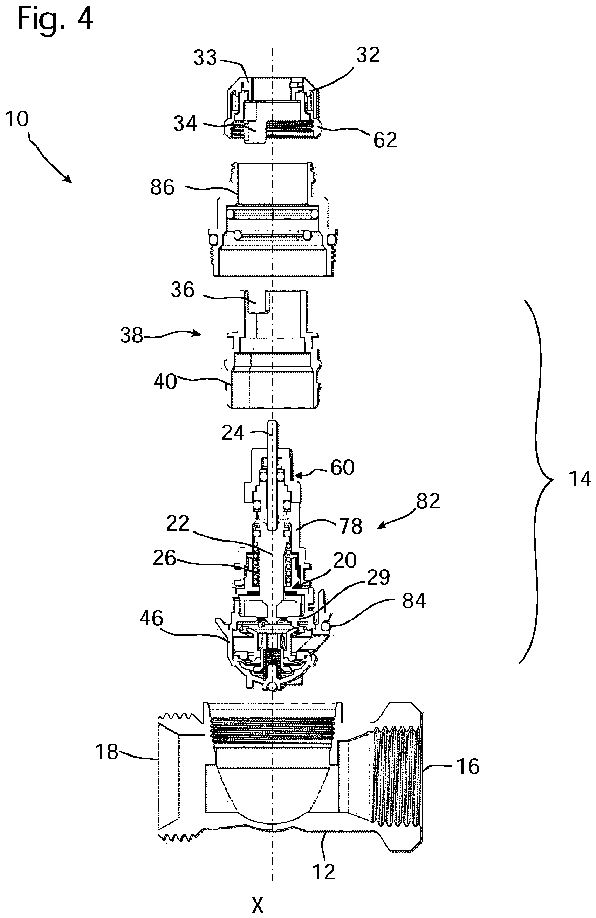

Fig. 4 shows in an exploded, sectional view the valve housing 12, the valve insert 14 and a valve top 86.

The valve insert 14 includes a central portion 82 and a presetting element 38. The valve top 86 covers the valve insert 14 and fixes it to the valve housing 12 by a screw connection. A handle 32 it mounted on top of the valve top 86. A ring element 33 is provided between the central portion 82 and the handle 32, surrounding the central portion 82.

The valve housing 12 and valve top 86 are made of metal, preferably brass. Further, the valve spring 26 and a nut 62 axially fixing the handle 38 are made of metal. The remaining parts of the valve insert 14 are made of a plastic material and may be formed by injection molding.

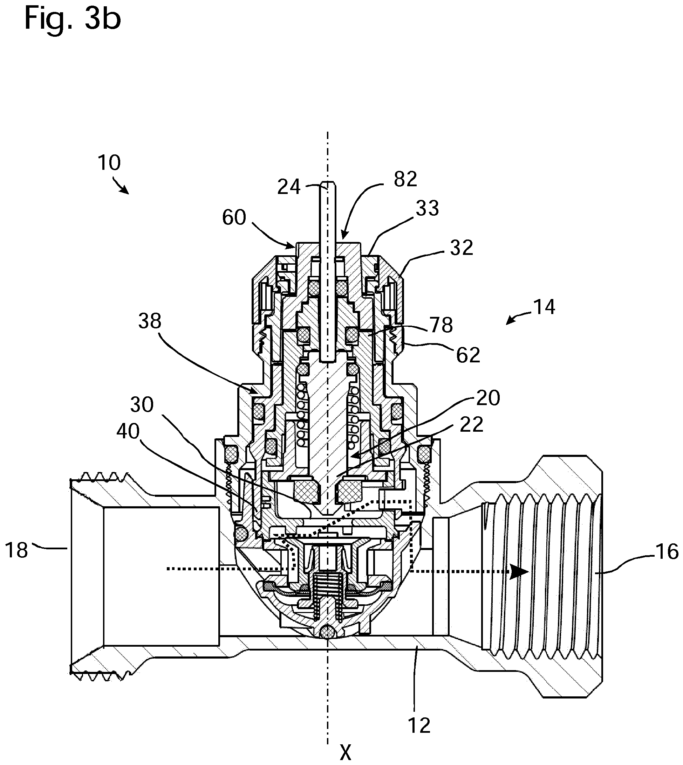

As visible in particular from Fig. 4, the central portion 82 comprises a lower part 46 of the valve, including a revolver seal 84. The revolver seal 84 is arranged to seal the valve insert 14 against the valve housing 12. In Fig. 4, the revolver seal 84 is shown facing the first fluid port 16. As will be explained below, the valve insert 14 is rotatable by 180° around the central longitudinal axis X to reverse the flow direction through the valve 10, such that the revolver seal 84 is then facing the second fluid port 18 as shown in Fig 3b.

The central portion 82 further comprises the valve seat ring 29 and the valve element 20 with the valve spring 26 as described above. The valve element 20 is axially movable within a valve sleeve 78, which is also part of the central portion 82. Further, a stuffing box 60 provided to slidingly mount the valve pin 24 forms part of the central portion 82.

The above described elements of the central portion 82 are all arranged rotationally fixed to each other. While they remain separate parts and are still separable - e.g. the stuffing box 60 with the valve pin 24 is axially held by a nut 62 screwed onto the valve top 86 - the stuffing box 60, valve sleeve 78, valve seat ring 29, and lower part 46 are interlocked with each other such that they cannot be rotated relative to each other around the longitudinal axis X.

The valve 10 further comprises a presetting function by which a selectable flow resistance for the flow path connecting the first and second ports 16, 18 is provided, even in the fully opened state of the valve opening 30. The ring-shaped handle 32 may be manually rotated around the longitudinal axis X. The handle 32 is rotationally coupled via a finger 34 (Fig. 4) and cutout 36 to a presetting element 38 including a presetting sleeve 40 arranged to surround the valve stem 22 and the valve seat ring 29. The ring element 33 is also rotationally coupled to the handle 32 and rotates therewith relative to the central portion 82.

The presetting element 38 is rotatable around the longitudinal axis X. The presetting sleeve 40 comprises a radial flow opening (not shown), and the valve seat ring 29 comprises a radial flow channel opening (not shown). By relative rotational positioning of the presetting element 38 relative to the valve seat ring 29, the flow opening and flow channel opening can be brought into different overlap positions, thereby selecting the size of the effective cross-section available for the fluid flow.

While the radial flow opening in the presetting sleeve 40 and the corresponding radial flow channel opening in the valve seat ring 29 are not shown, Fig. 3a shows schematically the flow through the valve 10 from the first fluid port 16 as inlet port to the second fluid port 18 as outlet port. As shown there, the flow traverses the valve seat ring 29 and presetting sleeve 40 after passing through the valve opening 30 defined by the valve seat 28 and the valve stem 22. The regulating function of the presetting element 38 therefore affects the flow in series to the regulating function of the valve seat 28 and valve element 20.

Presetting is thus effected by choosing a suitable rotation position of the presetting element 38 by means of the handle 32. As the presetting element is rotated, the central portion 82 remains stationary.

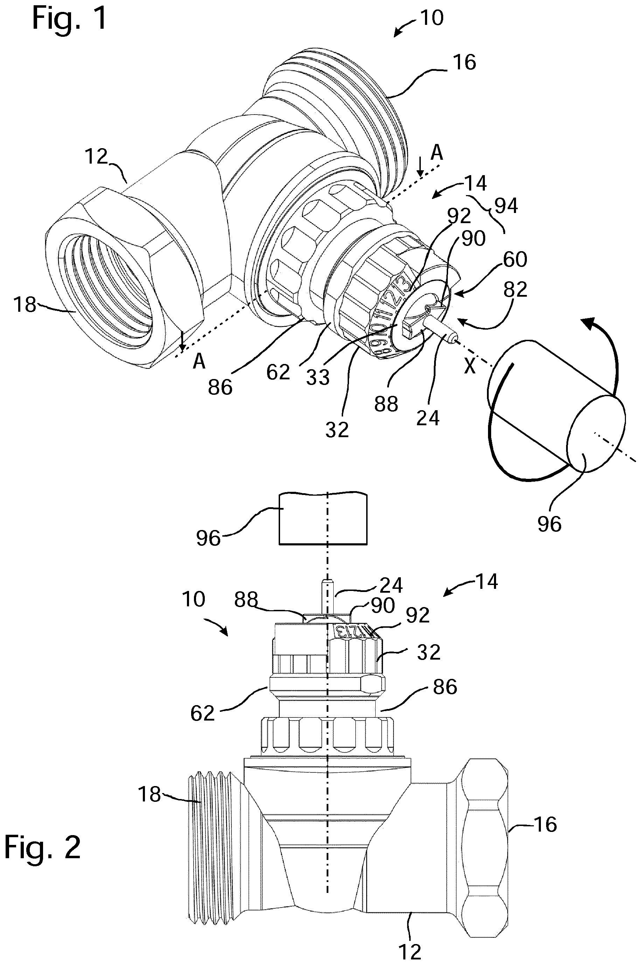

As explained and visible e.g. from Fig. 1, the handle 32 is ring-shaped and surrounds an upper part of the central portion 82. A presetting indicator 94 is provided comprising a presetting position marker 90 and a presetting position scale 92. The presetting position marker 90 is shaped as the tip of an arrow and provided on the stuffing box 60, which is part of the central portion 82. The presetting position scale 92 is provided on the outer surface of the handle 32 and comprises numbers serving as marks for different presetting positions spaced at equal distances around the central portion 82.

The presetting indicator 94 and the presetting position scale 92 are arranged in the same axial position, e.g. at the same height along the longitudinal axis X, as shown e.g. in Fig. 1, Fig. 2. They are not offset, but arranged adjacent to each other, which facilitates reading.

As the presetting element 38 and handle 32 are rotated relative to the central portion 82 to adjust the presetting, the presetting position marker 90 points to different marks of the presetting position scale 92, thereby indicating the chosen presetting position. Thus, a specific presetting position may be reached, corresponding to a maximum flow regulated by a corresponding degree of overlap between the radial flow opening (not shown) formed in the presetting sleeve 40 and the radial flow channel opening (not shown) formed in the valve seat ring 29, which is part of the central portion 82.

It should be noted that as shown in Fig. 3a the fluid flow through the valve opening 30 is directed in opening direction of the valve stem 22, i.e. the fluid flows first through the valve seat 28 before contacting the valve stem 22. This is the preferred flow direction, because a flow of fluid in reverse closing direction could move the valve stem 22.

While the valve 10 is shown in figure 3a in a position to be used for a flow of the heating fluid from the first fluid port 16 to the second fluid port 18, the valve 10 is also useable for reverse flow direction. The entire valve insert 14 may be rotated 180° around the longitudinal axis X, so that the connection of the first and second fluid ports 16, 18 to the valve seat 38 is reversed.

Rotation of the valve insert 14 may be effected by rotating the central portion 82, the top of which protrudes from the valve 10 as visible in particular from Fig. 1. On top of the stuffing box 60 a coupling element 88 is provided which allows rotational coupling to a reversing tool 96. The reversing tool 96 is provided with an engagement structure (not shown) shaped as a negative of the coupling element 88, such that it engages the top of the central portion 82 and couples thereto. By turning the reversing tool, e.g. by means of a handle of the reversing tool 96 (not shown), the central portion 82 is rotated together with the presetting element 38, while the valve housing 12 and the valve top 86 remain stationary.

The coupling element 88 provided on top of the central portion 82 has the shape of an arrow. As already explained, the tip of the arrow is used as presetting position marker 90. Further, the arrow serves a further purpose in that it is a direction indicator 91 which points in a specific direction between the first and second fluid ports 16, 18, namely the flow direction which ensures that the fluid flowing through the valve 10 will traverse the valve opening 30 in the preferred direction (opening direction of the valve 10). If the flow direction of the valve is reversed by rotating the central portion 82 as explained above, the arrow forming the direction indicator 91 will indicate the reverse flow direction.

As a result, visible from Fig. 3b, the connection to the fluid ports 16, 18 is reversed. In the reversed configuration shown in Fig. 3b, the first fluid port 16 is connected as an outlet and second fluid port 18 as an inlet. However, due to the valve insert 14 being rotated as compared to the position shown in Fig. 3a, the flow direction through the valve seat 28 is the same as before, i.e. the fluid flow is directed in opening direction of the valve stem 22.

It should be noted that the presetting element 38 is rotated along with the central portion 82, such that upon reversal of the valve 10 as explained the presetting position thereof relative to the central portion 82, more specifically to the valve seat ring 29, is maintained.

## Claims

1. Valve, comprising
- a central portion (82) including a valve element (20) movable relative to a valve seat (28) to adjust a valve opening (30) to regulate a fluid flow,
- wherein a presetting element (38) is provided to adjust a maximum flow through said valve opening (30),
- wherein said presetting element (38) is rotatable around said central portion (82), said central portion (82) being configured to remain stationary as said presetting element (38) is being rotated,
- wherein an upper part of said central portion (82) protrudes from said valve (10),
- wherein the upper part of said central portion (82) comprises a protruding valve pin (24) which is slidingly arranged to act on said valve element (20),
- wherein said presetting element (38) comprises or is connected to a rotatable handle (32),
the valve being **characterized in that** said handle (32) is ring shaped and arranged to rotate around said upper part of said central portion (82).

2. Valve according to claim 1, wherein
- said valve element (20) is movable in axial direction (X) relative to said valve seat (28) by linear displacement without rotation.

3. Valve according to claim 2, wherein
- the valve pin (24) is slidingly arranged to act on said valve element (20) in said axial direction (X).

4. Valve according to one of the above claims, wherein
- said presetting element (38) comprises a sleeve (40) arranged to surround at least a part of said central portion (82), said sleeve (40) defining a free cross-section of a flow channel arranged in series to said valve seat (28),
- wherein said free cross-section is dependent on a rotating position of said presetting element (38).

5. Valve according to any of the preceding claims, wherein
- a presetting indicator (94) is provided comprising at least two indicator elements movable with respect to each other together with a movement of said presetting element (38), one of said two elements being a presetting position scale (92) and the other a presetting position marker (90),
- wherein one of said indicator elements (90, 92) is provided on said handle (32) and the other on said central portion (82).

6. Valve according to claim 5, wherein
- said presetting position marker (90) and said presetting position scale (92) are arranged adjacent to each other in the same axial position.

7. Valve according to one of the above claims, wherein
- said valve (10) comprises a valve insert (14) rotatable to reverse a flow direction through said valve opening (30).

8. Valve according to claim 7, wherein
- said valve insert (14) is rotatable by rotating said central portion (82).

9. Valve according to claim 8, wherein
- said central portion (82) comprises a direction indicator (91) for a flow direction.

10. Valve according to claim 9 and 5 or 6, wherein
- an arrow shaped element serves as direction indicator (91) and presetting position marker (90).

11. Valve according to one of claims 7 - 10, wherein
- a top of said central portion (82) provides a coupling element (90) which may be coupled to a reversing tool (96) to rotate said valve insert (14).

12. Valve according to one of the above claims, wherein
- said central portion (82) is at least partly made of a plastic material.

## Patentansprüche

1. Ventil, Folgendes umfassend:
- einen Mittelabschnitt (82), der ein Ventilelement (20) umfasst, das in Bezug zu einem Ventilsitz (28) beweglich ist, um eine Ventilöffnung (30) anzupassen, um eine Fluidströmung zu regulieren,
- wobei ein Voreinstellungselement (38) vorgesehen ist, um eine maximale Strömung durch die Ventilöffnung (30) anzupassen,
- wobei das Voreinstellungselement (38) um den Mittelabschnitt (82) drehbar ist, wobei der Mittelabschnitt (82) dazu ausgelegt ist, stationär zu bleiben, während das Voreinstellungselement (38) gedreht wird,
- wobei ein oberer Teil des Mittelabschnitts (82) vom Ventil (10) vorsteht,
- wobei der obere Teil des Mittelabschnitts (82) einen vorstehenden Ventilstift (24) umfasst, der verschiebbar angeordnet ist, um auf das Ventilelement (20) zu wirken,
- wobei das Voreinstellungselement (38) einen drehbaren Griff (32) umfasst oder damit verbunden ist,
wobei das Ventil **dadurch gekennzeichnet ist, dass** der Griff (32) ringförmig und dazu angeordnet ist, sich um den oberen Teil des Mittelabschnitts (82) zu drehen.

2. Ventil nach Anspruch 1, wobei
- das Ventilelement (20) durch lineare Verstellung ohne Drehung in Axialrichtung (X) in Bezug zum Ventilsitz (28) beweglich ist.

3. Ventil nach Anspruch 2, wobei
- der Ventilstift (24) verschiebbar angeordnet ist, um in Axialrichtung (X) auf das Ventilelement (20) zu wirken.

4. Ventil nach einem der vorstehenden Ansprüche, wobei
- das Voreinstellungselement (38) eine Manschette (40) umfasst, die dazu angeordnet ist, zumindest einen Teil des Mittelabschnitts (82) zu umgeben, wobei die Manschette (40) einen freien Querschnitt in einem Strömungskanal definiert, der in einer Reihe mit dem Ventilsitz (28) angeordnet ist,
- wobei der freie Querschnitt von einer Drehstellung des Voreinstellungselements (38) abhängig ist.

5. Ventil nach einem der vorstehenden Ansprüche, wobei
- eine Voreinstellungsanzeige (94) vorgesehen ist, die mindestens zwei Anzeigeelemente umfasst, die zusammen mit einer Bewegung des Voreinstellungselements (38) zueinander beweglich sind, wobei eins der zwei Elemente eine Voreinstellungspositionsskala (92) und das andere eine Voreinstellungspositionsmarkierung (90) ist,
- wobei eins der Anzeigeelemente (90, 92) auf dem Griff (32) und das andere auf dem Mittelabschnitt (82) vorgesehen ist.

6. Ventil nach Anspruch 5, wobei
- die Voreinstellungspositionsmarkierung (90) und die Voreinstellungspositionsskala (92) in derselben Axialposition aneinander angrenzend angeordnet sind.

7. Ventil nach einem der vorstehenden Ansprüche, wobei
- das Ventil (10) einen Ventileinsatz (14) umfasst, der drehbar ist, um eine Strömungsrichtung durch die Ventilöffnung (30) umzukehren.

8. Ventil nach Anspruch 7, wobei
- der Ventileinsatz (14) durch Drehen des Mittelabschnitts (82) drehbar ist.

9. Ventil nach Anspruch 8, wobei
- der Mittelabschnitt (82) eine Richtungsanzeige (91) für eine Strömungsrichtung umfasst.

10. Ventil nach Anspruch 9 und 5 oder 6, wobei
- ein pfeilförmiges Element als Richtungsanzeige (91) und Voreinstellungspositionsmarkierung (90) dient.

11. Ventil nach einem der Ansprüche 7-10, wobei
- auf der Oberseite des Mittelabschnitts (82) ein Kopplungselement (90) vorgesehen ist, das mit einem Umkehrwerkzeug (96) gekoppelt werden kann, um den Ventileinsatz (14) zu drehen.

12. Ventil nach einem der vorstehenden Ansprüche, wobei
- der Mittelabschnitt (82) zumindest teilweise aus einem Kunststoffmaterial besteht.

## Revendications

1. Vanne, comprenant
- une partie centrale (82) comprenant un obturateur (20) déplaçable par rapport à un siège de vanne (28) afin d'ajuster une ouverture de vanne (30) pour réguler un écoulement de fluide,
- un élément de préréglage (38) étant prévu pour ajuster un écoulement maximal à travers ladite ouverture de vanne (30),
- ledit élément de préréglage (38) pouvant être mis en rotation autour de ladite partie centrale (82), ladite partie centrale (82) étant configurée pour rester immobile tandis que ledit élément de préréglage (38) est mis en rotation,
- une partie supérieure de ladite partie centrale (82) dépassant de ladite vanne (10),
- la partie supérieure de ladite partie centrale (82) comprenant une tige de vanne saillante (24) qui est disposée à coulissement pour agir sur ledit obturateur (20),
- ledit élément de préréglage (38) comprenant ou étant raccordé à une poignée rotative (32),
la vanne étant **caractérisée en ce que**
ladite poignée (32) est de forme annulaire et conçue pour effectuer une rotation autour de ladite partie supérieure de ladite partie centrale (82).

2. Vanne selon la revendication 1, dans laquelle
- ledit obturateur (20) est déplaçable dans une direction axiale (X) par rapport audit siège de vanne (28) par un déplacement linéaire sans rotation.

3. Vanne selon la revendication 2, dans laquelle
- la tige de vanne (24) est disposée à coulissement pour agir sur ledit obturateur (20) dans ladite direction axiale (X).

4. Vanne selon l'une des revendications ci-dessus, dans laquelle
- ledit élément de préréglage (38) comprend un manchon (40) disposé de façon à entourer au moins une partie de ladite partie centrale (82), ledit manchon (40) définissant une section transversale libre d'un canal d'écoulement disposé en série vis-à-vis dudit siège de vanne (28),
- ladite section transversale libre dépendant d'une position de rotation dudit élément de préréglage (38).

5. Vanne selon l'une quelconque des revendications précédentes, dans laquelle
- un indicateur de préréglage (94) est prévu, celuici comprenant au moins deux éléments indicateurs déplaçables l'un par rapport à l'autre avec un déplacement dudit élément de préréglage (38), l'un desdits deux éléments étant une échelle de position de préréglage (92) et l'autre étant un repère de position de préréglage (90),
- l'un desdits éléments indicateurs (90, 92) étant placé sur ladite poignée (32) et l'autre sur ladite partie centrale (82).

6. Vanne selon la revendication 5, dans laquelle
- ledit repère de position de préréglage (90) et ladite échelle de position de préréglage (92) sont disposés l'un à côté de l'autre dans la même position axiale.

7. Vanne selon l'une des revendications ci-dessus,
- ladite vanne (10) comprenant une garniture de vanne (14) pouvant être mise en rotation pour inverser une direction d'écoulement à travers ladite ouverture de vanne (30).

8. Vanne selon la revendication 7, dans laquelle
- ladite garniture de vanne (14) peut être mise en rotation par la mise en rotation de ladite partie centrale (82).

9. Vanne selon la revendication 8, dans laquelle
- ladite partie centrale (82) comprend un indicateur de direction (91) pour une direction d'écoulement.

10. Vanne selon les revendications 9 et 5 ou 6, dans laquelle
- un élément en forme de flèche sert d'indicateur de direction (91) et de repère de position de préréglage (90) .

11. Vanne selon l'une des revendications 7 à 10, dans laquelle
- une partie supérieure de ladite partie centrale (82) fournit un élément d'accouplement (90) qui peut être accouplé avec un outil d'inversement (96) pour mettre ladite garniture de vanne (14) en rotation.

12. Vanne selon l'une des revendications ci-dessus, dans laquelle
- ladite partie centrale (82) est au moins partiellement composée d'une matière plastique.
